Europäisches Patentamt

European Patent Office

Office européen des brevets

(19)

(11) Publication number: **0 103 777**

**A1**

# (12) EUROPEAN PATENT APPLICATION

(21) Application number: **83108393.6**

(51) Int. Cl.³: **G 01 M 3/02**

(22) Date of filing: **25.08.83**

(30) Priority: **27.08.82 PL 238058**

(43) Date of publication of application:
**28.03.84 Bulletin 84/13**

(84) Designated Contracting States:
**AT DE FR GB IT NL**

(71) Applicant: **Instytut Chemii Przemyslowej**
**Rydygiera Strasse 8**
**Warszawa(PL)**

(72) Inventor: **Friedrich, Pawel**
**Generala Zajaczka Strasse 17**
**Warszawa(PL)**

(72) Inventor: **Placzek, Wieslaw**
**Kickiego Strasse 5**
**Warszawa(PL)**

(72) Inventor: **Brzezinski, Stanislaw**
**Czumy Strasse 13**
**Warszawa(PL)**

(72) Inventor: **Gaszewski, Jerzy**
**ul. Szekspira 4 m.371**
**01-913 Warszawa(PL)**

(74) Representative: **Patentanwälte Zellentin**
**Zweibrückenstrasse 15**
**D-8000 München 2(DE)**

(54) **Holder for plastic pipes being tested for internal pressure at temperatures up to 200oC.**

(57) The invention relates to a holder for plastic pipes mainly used in testing these pipes for internal pressure at temperatures up to 200°C in adequate devices adopted for this purpose. The holder according to the invention comprises a set of two holders – a top holder and a bottom holder – to be put on the opposite ends of the pipe to be tested, one of them, advantageously the top holder, has additionally a hole whith conduits connecting the pipe to be tested with the hydraulic system of the testing device which vents the pipe and fills it with the medium and the other holder, advantageously the bottom holder, constitutes the closure of the pipe end.

Each holder comprises two separable basic parts – the cover and the clamping ring-connected together by means of adequate fasteners, advantageously screws, whereas the size and the shape of these parts as well as the amount and size of fasteners are adapted to the size and shape of the pipe to be tested.

./...

fig.1

PATENTANWÄLTE
Z E L L E N T I N
ZWEIBRÜCKENSTR. 15
8000 MÜNCHEN 2

Instytut Chemii Przemyslowej          August 25, 1983
Rydgiera Str. 8                       Eu 83 253 Ke/K
00-95 Warszawa / Poland

Holder for Plastic Pipes being Tested for Internal
Pressure at Temperatures up to 2oo$^{\circ}$C

This invention relates to a holfer for plastic pipes
used mainly in testing these pipes for internal pressure
strength at temperatures up to 2oo$^{\circ}$C in adequate devices
adopted for this purpose. This holder makes it
possible to fasten correctly the pipe segment designed
for testing, to fill the pipe with a medium heated to
temperature up to 2oo$^{\circ}$C and to generate within the pipe
a pressure of the medium corresponding to the required
stress in its wall. The holder for the plastic pipes to
be tested has to fulfil the following requirements:
- a complete tightness of the pipe during the test must
  be provided,
- the pipe should be clutched in a way preventing the
  holder from sliding down during the test unter the
  influence of big axial forces being derived from the
  pressure of the medium within the pipe,
- fastening of the holder should not cause any stress
  concentration in the pipe in the neighbourhood of
  the holder,
- during the longtime test at elevated temperatures the
  non-metallic materials used for gaskets should not
  prematurely decay or be destroyed,
- the holder must make it possible to fill the pipe
  with the medium and to vent it simultaneously as well to generate the required pressure during the test;
- an easy assembly of the holder on the pipe as well as its disassembly after the end of the test should be possible.

There are various known kinds of holders being used for testing plastic pipes, meeting the abovementioned requirements in a lesser or a major degree. However the majority of constructional solutions does not meet all the named requirements simultaneously and on account of the kind of the gaskets used and of the way of protecting the holders against sliding down from the pipe, they are not designed for working at temperatures above $100^{O}C$.

Another inconvenience of the most holders being used at present consists in the necessity to plastify preliminarily the end of the pipe by preheating it before putting the holder on it. This causes the formation of additional stresses in the pipe, the operation being very difficult and if the pipes to be tested have big diameters the operation is even impossible without application of special devices for preheating the pipe-ends.

Further there are known holders adapted for fastening on the pipe without its preheating. For example there is known a holder of this kind designed for fastening samples of plastic pipes in an strength testing device, developed by the Institut für Prüftechnik, Federal Republic of Germany - symbol RP-9o4. This holder is most similar to the subject matter of this invention, notwithstanding that essential differences are between the both holders. The known holder comprises two rigid, practically indeformable clamping rings with grooves provided inside and a packing ring with its mounting. The pipe to be tested is clamped between the clamping rings by means of screws and the holder is thus jammed on the pipe. Such clamping of the pipe causes the distortion of its original shape i.e. the pipe looses its circular section. In consequence in the wall of the pipe may occur additional stresses caused by an uneven distribution of the radial clamping forces on the circumference which may contribute to the cracking of the pipe in the proximity of the holder. This is an absolutely undesired phenomenon. A further inconvenience of the abovementioned holder consists in the fact that there is no possibility to provide in this holder a constant relation between the quantity of the clamping forcec and the pressure of the medium whithin the pipe. This is a disadvantageous phenomenon, because clamping of the holder without maintaining proper relations between the abovementioned forces causes either sliding down of the holder from the pipe, as the clamping force are to weak, or formation of a needless surplus of this force and in consequence an increase of undesired additional stresses.

This kind of holders for testing plastic pipes, although they may be used for various purposes, are designed mainly for fastening pipes being tested for their internal pressure strength and in this connection can be used in principle only in devices serving for this kind of tests. In such testing one set of holders comprising a top holder and a bottom holder is necessary for one pipe. According to the construction of the device for testing pipe strength the bottom holder may have a valve for venting the pipe and the

top holder may be provided with a medium supply conduit. There exists also another solution in which the bottom holder constitutes the closure of the pipe end without any hole and the top holder is equipped with a venting conduit and a medium supply conduit.

The disadvantages of the former holders for testing plastic pipes are eliminated unexpectedly by the holder according to this invention providing an improved construction of the system sealing and blocking the holder on the pipe, which allows an uniform distribution of the clamping forces on the circumference of the pipe, the quantitiy of these forces being connected with and depending on the pressure existing within the pipe being tested. The holder according to his invention not only meets at the same time all the requirements set on it, but also due to the choice of an adequate gasket permits to provide testing temperatures up to $200^{\circ}$C. The holder according to this invention constitutes a set composed of two holders - the top holder and the bottom holder - which are put on the opposite ends of the pipes to be tested, each single holder comprises two separate basic parts - an immovable cover and an immovable clamping ring - connected together when put on the end of the pipe by means of fasteners, advantageously screws, the cover of the holder is to be connected with the hydraulic system comprises a tapped hole, in which an attachment enabling to vent the pipe and to fill it with the medium, is fastened. Each cover has on the inside a conical surface on which is placed a specially shaped disk spring, this cover being separably connected with the clamping ring via a metal ring and an elastic packing ring. Each clamping ring has in its upper inner part a cylindrical surface constituting a guide for the cover operating with the clamping ring, whereas the lower inner part of the clamping ring shows a conical surface, on which two elastic half-rings being moved. The outer surface of the half-rings constitutes a cone corresponding to the cone of the clamping ring, whereas the inner surface forms a cylinder with a screw line with sharp edges. The diameter of the cylindrical surface of the half-rings is adjusted to the outer diameter of the pipe being tested. The shape and size of all parts of the holder for example the covers, the clamping rings, the half-rings and the connecting elements depend on the diameter of the pipe to be tested. The abovementioned elements are made from stainless steel, whereas the elastic packing ring is made from a material resistant to the action of temperature raising up to $200^{O}C$, advantageously ethylene-propylene rubber.

The holder according to this invention is hereafter explained in more detail, referring to a practical example shown in the drawings.

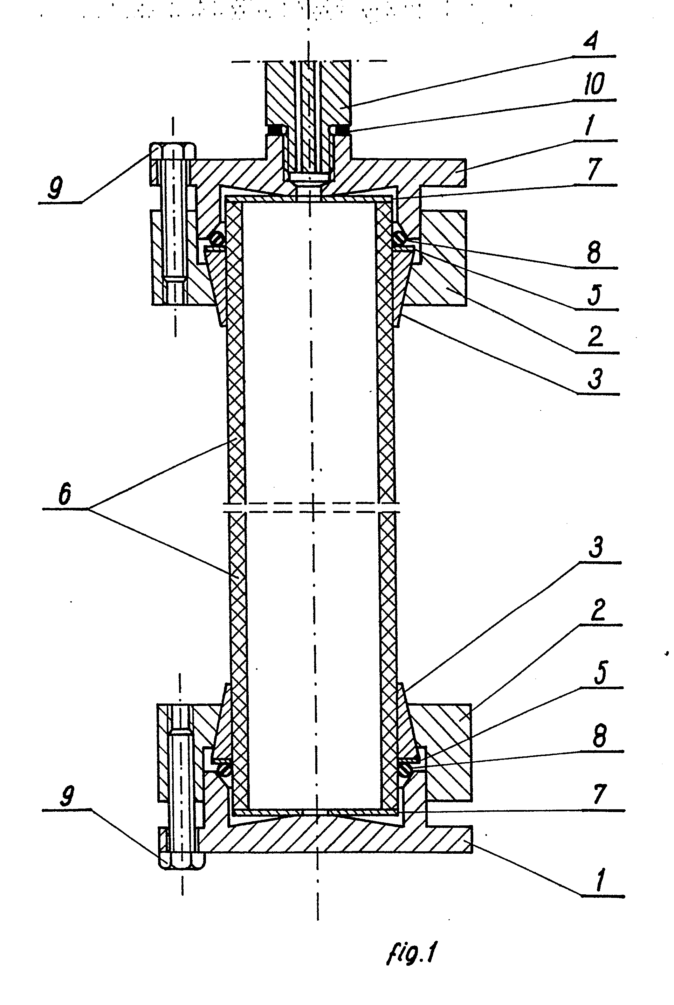

Fig. 1 represents the entire holder together with the pipe prepared to work and

Fig. 2 represents the top holder with the attachment to the hydraulic system.

This holder comprises a cover 1 to which is screwed a attachment 4. This attachment has two parts. One of them connected with the hydraulic system of the testing device is provided for venting the pipe sample and the other is designed for filling it with a medium and for maintaining pressure within it. The attachment 4 is sealed with the cover 1 by the gasket 1o. The cover 1 has in its inner part a conical surface on which is placed a disk spring 7. Due to the provision of a conical surface the disk spring 7 can be deformed within the limits of elasticity. The cover 1 is connected with the clamping ring 2 in such a way that the outer cylindrical bottom surface of the cover operates with the inner cylindrical top surface of the clamping ring ensuring the coaxiality of the movement of these parts. The inner bottom part of the clamping ring 2 has the shape of a cone in which are placed two elastic half-rings 3. These rings 3 comprise on their inner cylindrical surface, the diameter of which being equal to the diameter of the pipe 6 to be tested, a screw line with sharp edges. On the top surface of the elastic half-rings is located a packing ring 5, and the elastic gasket 8 placed at the same time in a special neck of the cover 1. The cover 1 is connected with the clamping ring by means of screws 9.

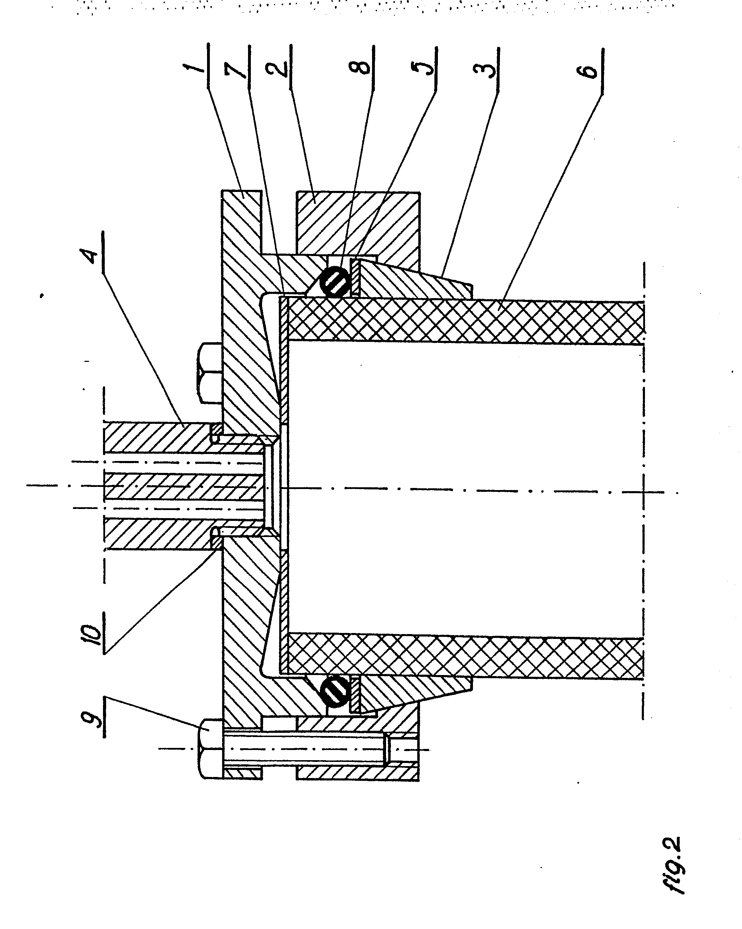

The holder according to the invention acts in the following way: both holders, i.e. the top holder and the bottom holder, are to be put on the opposite ends of the pipe to be tested as shown on fig. 2, with loosened screws 9. By turning the screws 9 the holder is blocked and sealed on the pipe. When the screws are turned the cover 1 is moved in relation to the clamping ring 2. This generates an axial force which presses down the elastic half-rings 3 to the outer wall of the pipe 6.

The half-rings 3 are jammed even by a slight axial force on account of the sharp edges of the screw line provided on their cylindrical parts. By further turning the screws, after the half-rings have been jammed, the elastic gasket 8 being compressed, the disk spring 7 being at the same time deformed. Simultaneously the phenomenon of further indentation of the half-rings into the walls of the pipe 6 occurs. In result the force with which the gasket 8 is compressed - and at the same time, due to the fact that it is located in a special neck of the cover 1 and is pressed to the outer wall of the pipe- does not depend on the forces generated by turning the screws but only on the elasticity of the disk spring 7. This is very essential as there exists no need to apply big forces for connecting the cover 1 of the holder with the clamping ring 2; thus rendering it possible to eliminate the risk of generating additional stresses in the walls of the pipe and to protect the gasket 8 against destruction. In consequence of the above the holder is fastened on the pipe in an "elastic" way. The use of mobile elastic half-rings 3 and of the disk spring 7 in the holder according to this invention leads to a certain automation of the blocking process, as the system "pipe-holder" becomes a system readjusting itself to the pressure of the medium in the pipe and, what is most important, between the clamping forces and the pressure a constant dependence is being established.

The holder according to the invention, in addition to a more convenient handling as compared with known holders, provides also a coaxiality of the holder and the pipe. This is important in the case when the pipe has technological errors of shape. The trend towards coaxiality may then eliminate the generating of undesired bending moments.

It has to be added that in the holder according to this invention the pipe is sealed on its outer wall. This is very important as the outer diameters of pipes are standardized and the thickness of their walls being different. In this way the holder makes it possible to test all pipes of a given diameter without respect to the thickness of their walls.

The holder according to this invention does not require any special preparation of the pipe for its fastening in contrast to the abovementioned holder produced in the Federal Republic of Germany which makes it necessary to execute on the ends of the pipe a bevel with strictly determined dimensions. This is very important as machining the ends of the pipe causes serious difficulties, particularly at major diameters.

0103777

**PATENTANWÄLTE**
**Z E L L E N T I N**
ZWEIBRÜCKENSTR. 15
8000 MÜNCHEN 2

Instytut Chemii Przemyslowej          August 25, 1983
Rydgiera Str. 8                       Eu 83 253 Ke/K
oo-95 Warszawa / Poland

What we claim is:

1. Holder for plastic pipes to be tested for internal pressure at temperatures up to 2oo°C comprising a set of two holders - a top holder and a bottom holder - to be put on the opposite ends of the pipe being tested, one of them, advantageously the top holder, has additionally a hole with conduits connecting the pipe to be tested with the hydraulic system of the testing apparatus venting the pipe and filling it with the medium, whereas the second holder, advantageously the bottom holder, constitutes the closure of the pipe end,

   c h a r a c t e r i z e d   i n
   that each holder consists of two separable basic parts - the cover 1 and the clamping ring 2 - connected together by means of adequate fasteners, advantageously screws 9, the cover 1 of the holder designed to be connected with the hydraulic system has on its outer side additionally a hole with the above mentioned destination, whereas the cover 1 of both holders, the top holder and the bottom holder, has inside a conical surface with a disk spring 7 placed on it and the lower part of the cover 1 has its outer surface in the shape of a cylinder operating with a corresponding cylindrical surface of the clamping ring 2 which has an inner conical surface where are situated two elastic half-rings 3 on the upper edge of which being placed a packing ring 5 and an elastic gasket 8 contacting simultaneously with a special neck of the cover 1, both these elements separating the cover 1 from clamping ring 2.

2. Holder according to claim 1 c h a r a c t e r i z e d  i n that the shape and the size of the cover 1, the clamping ring 2 and the disk spring 7 as well as the amount and the dimensions of the connecting screws are adapted to the size and to the shape of the pipes to be tested.

0103777

fig.1

fig.2

0103777

**European Patent Office**

**EUROPEAN SEARCH REPORT**

Application number

EP  83 10 8393

## DOCUMENTS CONSIDERED TO BE RELEVANT

| Category | Citation of document with indication, where appropriate, of relevant passages | Relevant to claim |
|---|---|---|
| X | FR-A-1 514 706  (B. ALLIEVI)<br>* Figures 1, 3 *<br><br>--- | 1,2 |
| A | US-A-4 197 733  (R.W. HOLLAND)<br>* Claim 1; figure 2 *<br><br>----- | 1 |

**CLASSIFICATION OF THE APPLICATION (Int. Cl. ³)**

G 01 M   3/02

**TECHNICAL FIELDS SEARCHED (Int. Cl. ³)**

G 01 M   3/02

The present search report has been drawn up for all claims

| Place of search | Date of completion of the search | Examiner |
|---|---|---|
| BERLIN | 01-12-1983 | SCHWARTZ K |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 

& : member of the same patent family, corresponding
     document

EPO Form 1503. 03.82